# EUROPEAN PATENT APPLICATION

(11) **EP 2 660 034 A1**
(43) Date of publication of application: **06.11.2013**
(21) Application number: 11852741.5
(22) Date of filing: 06.07.2011
(51) Int. Cl.: B29C 47/00, B29C 47/06, B32B 33/00, B32B 37/10

(54) **IMPROVEMENT TO THE SURFACE QUALITY OF COMPOSITES**

(30) Priority: 27.12.2010 BR PI1005235
(71) Applicant: MVC Componentes Plásticos Ltda., CEP-83.045.430 Paraná (BR)
(72) Inventor: DA COSTA LIMA, Gilmar, Parana (BR)
(74) Representative: Fernández-Pacheco, Aurelio Fernández
(86) International application number: PCT/BR2011/000209
(87) International publication number: WO 2012/088569

(57) **Abstract**

This patent of invention refers to a production process for enhancing the surface quality of composites, when the product to be manufactured requires a high quality external finish and mechanical strength on the inner side.

The goal of this patent of invention is comprised of a first stage which entails thermoplastic film extrusion (1) with an option to obtain multilayer sheets (1'), in order to totally eliminate the painting process. The latter is formed from a common ABS layer (3) with base material, an intermediate ASA layer (4) enabling choice of color for the finish and at the same time protection against ultraviolet rays, and a final layer consisting of PMMA (acrylic) (5). Both the thermoplastic film (1) and the thermoplastic multilayer sheet (1') are processed by means of an extrusion machine (2) and taken to a vacuum forming mold (6), copying all its details.

Once the sheet is formed (1, 1'), it is taken to a Light RTM mold (7), where it is positioned, after which a special fiber glass mat (8), for injection molding is placed upon it. Subsequently, the counter mold (9) is closed at which time the injection molding of the thermoset resin takes place, thereby obtaining the composite material (10) (resin + fiberglass). After the complete catalysis of the resin in a closed mold injection process, it remains attached to the thermoplastic sheet (1, 1'), forming a compound with high surface quality and high mechanical strength, resulting in the RTM-S process (11).

## Description

This patent of invention refers to a production process for enhancing the surface quality of composites, when the product to be manufactured requires a high quality external finish and mechanical strength on the inner side.

The characteristics of thermoplastic material are known for their high-finish capability, since its attributes make it possible to obtain an excellent or class "A" quality surface, and also, if painting is needed afterwards, it provides very favorable conditions for the preparation of this process. However, for some specific applications thermoplastic material does not offer sufficient mechanical strength to meet certain designated specifications, resulting in a product with excellent finish, but insufficient mechanical strength properties. The goal of this patent of invention is a unique product that is able to provide class "A" surface and high mechanical strength. This is achieved by a thermoplastic film or a multilayer thermoplastic sheet system with ABS, as the base material, ASA which permits choice of color and at the same time UV protection, and acrylic which provides a high gloss surface, which are combined through their simultaneous extrusion. The sheet is then taken to a vacuum forming mold and transformed according to the geometry of the mold, copying all its details. Afterwards, the part is taken to an RTM Light mold, where the thermoplastic part is positioned in order to initiate the process for assembling the special fiber glass mats for RTM, as per the traditional concept for this process. After this stage comes the injection molding of a thermoset resin, which is specially developed and refined to ensure perfect adhesion with the thermoplastic film (or multilayer sheet), with the help of an adhesion promoter specifically designed for this purpose. This resin also has to ensure perfect compatibility with the thermoplastic part, in regards to material shrinkage and thermal stability, thereby avoiding dimensional and peeling problems after its catalysis. Following the catalysis of the resin in a closed mold injection process, it remains attached to the thermoplastic part, creating a part composed of the two materials. The first layer is made from thermoplastic material with excellent surface quality and the second one from thermoset material, for the purpose of adding significant mechanical strength.

The advantages of this patent of invention include:
A) combines the advantages of a vacuum-formed thermoplastic finish, with the strength and stability of thermoset injection molding;
B)this particular advantage offers improvements in surface features with regard to ripples, texture flaws, porosity, bubbles, cracks;
C)optimization of the thermoset process of the parts, due to the elimination of the gelcoat application, and in this case it also ends up reducing volatile content, thus decreasing pollution in the workplace and the need for exhaust booths;
D)greater design flexibility due to the possibility of developing parts with a smaller radius;
E) significantly reduces the paint preparation process, and consequently production costs, which is currently a problem in all composites manufacturing processes;
F) possibility of totaling eliminating the painting stage, using special thermoplastics developed for this purpose;
G)favors the recycling process of the product, due to the presence of thermoplastic material.

In order to provide a complete understanding of this patent of invention, it will be outlined in detail, based on the following figures, which should not be considered limitative:
Figure 1 - schematic drawing of the manufacturing of a thermoplastic sheet by extrusion;
Figure 2 - detailed view of the multilayer sheet;
Figure 3 - molding of the thermoplastic film or thermoplastic sheet using the multilayer system through a vacuum forming process;
Figure 4 - molding through the RTM Light process;
Figure 5 - variation of the RTM-S process;
Figure 6 - alternative composition of the multilayer sheet.

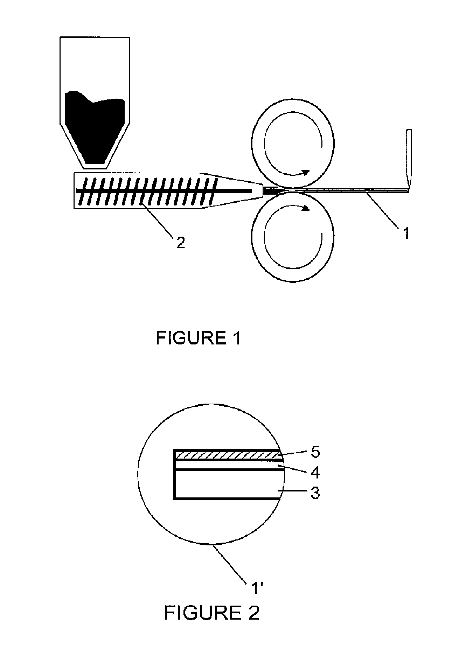

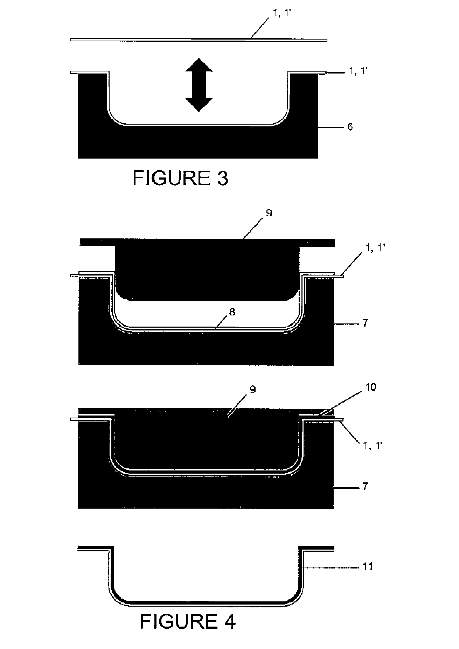

Figures 1-6 illustrate the proposed process which is comprised of a first stage which entails thermoplastic film extrusion (1) with an option to obtain multilayer sheets (1'), in order to totally eliminate the painting process. The latter is formed from a common ABS layer (3) with base material, an intermediate ASA layer (4) enabling choice of color for the finish and at the same time protection against ultraviolet rays, and a final layer consisting of PMMA (acrylic) (5). Both the thermoplastic film (1) and the multilayer thermoplastic (1') are processed by means of an extrusion machine (2) and taken to a vacuum forming mold (6), copying all its details.

Once the sheet is formed (1, 1'), it is taken to a Light RTM mold (7), where it is positioned, after which a special fiber glass mat (8) for injection molding is placed upon it. Subsequently, the counter mold (9) is closed at which time the injection molding of the thermoset resin takes place, thereby obtaining the composite material (10) (resin + fiberglass). After the complete catalysis of the resin in a closed mold injection process, it remains attached to the thermoplastic sheet (1, 1'), forming a compound with high surface quality and high mechanical strength, resulting in the RTM-S process (11).

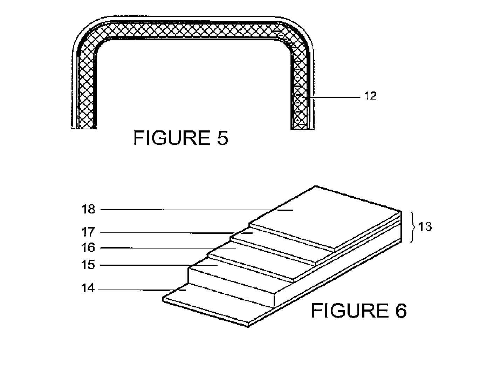

Alternatively, variations in the process can be achieved, through using special structural cores (12), such as polyurethanes, a beehive structure, wood, etc., during the injection molding process of the RTM-S process, illustrated in Figure 5.

Also, multilayer sheets (1') can be comprised of up to five layers (13) in order to simulate special paints with metallic or pearlescent effects. This multilayer system consists of a thermoplastic base layer (14), in order to improve the formation process, common ABS (15) as filling material, and an intermediate ASA layer (16) enabling choice of color for the finish and at the same time protection against ultraviolet rays, PMMA and metallic pigments (17) and a final layer composed of PMMA (acrylic) (18) for obtaining a high gloss surface.

## Claims

1. **IMPROVEMENT TO THE SURFACE QUALITY OF COMPOSITES",** is comprised of a first stage which entails thermoplastic film extrusion (1), **characterized by** the fact that multilayer sheets (1') can be obtained, in order to totally eliminate the painting process, formed from a common ABS layer (3) with base material, an intermediate ASA layer (4) enabling choice of color for the finish and at the same time protection against ultraviolet rays, and a final layer consisting of PMMA (acrylic) (5), processed by means of an extrusion machine (2) and taken to a vacuum forming mold (6), copying all its details; once the sheet is formed (1, 1'), it is taken to a Light RTM mold (7), where it is positioned, after which a special fiber glass mat (8) for injection molding is placed upon it; subsequently, the counter mold (9) is closed at which time the injection molding of the thermoset resin takes place, thereby obtaining the composite material (10) (resin + fiberglass); after the complete catalysis of the resin in a closed mold injection process, it remains attached to the thermoplastic sheet (1, 1'), forming a compound with high surface quality and high mechanical strength, resulting in the RTM-S process (11).

2. **"IMPROVEMENT TO THE SURFACE QUALITY OF COMPOSITES",** according to patent claim 1, **characterized by** the fact that, alternatively, variations in the process can be achieved, through using special structural cores (12), such as polyurethanes, a beehive structure, wood, etc., during the injection molding process of the RTM-S process.

3. **"IMPROVEMENT TO THE SURFACE QUALITY OF COMPOSITES",** according to patent claim 1, is **characterized by** the fact that multilayer sheets (1') can be comprised of up to five layers (13), in order to simulate special paints with metallic or pearlescent effects, and consists of a thermoplastic base layer (14), common ABS (15) as filling material, and an intermediate ASA layer (16) enabling choice of color for the finish and at the same time protection against ultraviolet rays, PMMA and metallic pigments (17) and a final layer composed of PMMA (acrylic) (18) for obtaining a high gloss surface.
